## Europäisches Patentamt
## European Patent Office
## Office européen des brevets

(19)

(11) Veröffentlichungsnummer: **0 116 711**
**B1**

(12) # EUROPÄISCHE PATENTSCHRIFT

(45) Veröffentlichungstag der Patentschrift:
18.05.88

(51) Int. Cl.⁴: **B 25 B 7/12,** B 29 D 29/00,
**B 26 B 17/02**

(21) Anmeldenummer: 83112622.2

(22) Anmeldetag: 15.12.83

(54) Gelenkhebelzange.

(30) Priorität: 25.01.83 CH 407/83

(43) Veröffentlichungstag der Anmeldung:
29.08.84 Patentblatt 84/35

(45) ·Bekanntmachung des Hinweises auf die Patenterteilung:
18.05.88 Patentblatt 88/20

(84) Benannte Vertragsstaaten:
CH DE FR GB IT LI SE

(56) Entgegenhaltungen:
CH-A-104 148
DE-A-1 502 761
FR-A-1 341 705
GB-A-444 927
US-A-3 872 528

(73) Patentinhaber: Strapex AG, Nordstrasse 1, CH- 5610 Wohlen (CH)

(72) Erfinder: Schnellmann, Klaus, Binzacher 10, CH- 8166 Niederweningen (CH)

(74) Vertreter: Patentanwälte Schaad, Balass & Partner, Dufourstrasse 101 Postfach, CH- 8034 Zürich (CH)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft eine Gelenkhebelzange nach dem Oberbegriff des Anspruchs 1.

Eine Gelenkhebelzange dieser Art ist aus der DE-A 1 502 761 bekannt. Diese bekannte Gelenkhebelzange dient als Schere zum Schneiden von Betonbewehrungen. Sie weist unter zweifacher Hebelwirkung gegeneinander und gegen ein Mittelteil bewegbare Backen auf. Dabei wird die Schwenkbewegung der von Hand zu betätigenden Betätigungsarme relativ stark untersetzt, um an den Backen über eine relativ grosse Schliesskraft zu verfügen.

Für einen erhöhten Kraftbedarf genügt es bei gegebener Grösse des die Backen enthaltenden Zangenkopfes nicht, nur die Betätigungsarme zu verlängern, weil in einem solchen Fall die Gelenke überbeansprucht werden. Es ist dann erforderlich, auch die Gelenke zu verstärken, so dass eine solche Gelenkhebelzange dann grösser und unhandlich zu werden droht.

Der Erfindung liegt deshalb die Aufgabe zugrunde, eine Gelenkhebelzange zu schaffen, die bei gegebener Grösse zur Übertragung grösserer Kräfte als bei der bisherigen Konstruktion geeignet ist.

Die gestellte Aufgabe lässt sich durch die im kennzeichnenden Teil des Anspruchs 1 angegebenen Merkmale lösen.

Bei einer solche Lösung wird die Kraft von den Betätigungsarmen auf die Gelenkhebel durch die Abstützmittel übertragen. Dadurch werden die in der Art von Kniehebelgelenken wirkenden Gelenke entlastet, wodurch die Konstruktion einer kompakten, leistungsfähigen Gelenkhebelzange möglich ist. Ferner ist es möglich, eine bereits bestehende Konstruktion durch den Einbau solcher Abstützmittel zu verstärken.

Durch eine vorteilhafte Ausgestaltung der Erfindung nach Anspruch 2 wirkt das auf der Achse des zentralen Gelenkes angeordnete Abstützmittel wie ein Keil, welches die auf den Achsen der beiden weiteren Gelenke angeordneten Rollen auseinandertreibt. Insbesondere handelt es sich bei einer solchen Ausführungsform um eine Verlagerung der Kräfte von den Gelenken auf die Abstützmittel.

Bei einer Ausführungsform nach Anspruch 3 bestehen die Abstützmittel lediglich aus sich aufeinander abwälzenden Rollen, die ein Minimum an Reibung verursachen und eine gleichmässige Belastung über den vollen Schwenkbereich der Betätigungsarme gewährleisten.

Eine Ausführungsform nach Anspruch 4 ist insbesondere dann vorteilhaft, wenn sich die Achsen der beiden anderen Gelenke auf einen Mindestabstand nähern sollen, wobei die Bemessung insbesondere von der Geometrie der Gelenkhebel Abhängig ist.

Obwohl es möglich ist, beide Gelenkhebel auf ein und derselben Achse zu lagern, ist es nach Anspruch 5 vorteilhaft, beiden Gelenkhebeln je eine Gelenkachse zuzuordnen, welche in einem festen Abstand voneinander angeordnet sind.

Der feste Abstand wird am besten gemäss einer Ausführungsform nach Anspruch 6 festgelegt. Ferner ergibt sich durch eine solche Ausführungsform eine besonders solide Konstruktion des Zangenkopfes, in dem auch das zentrale Gelenk relativ zu den beiden Schwenkachsen der Gelenkhebel exakt geführt ist. Ferner ermöglicht das zur Führung bestimmte Langloch die Bereitstellung eines Anschlages, um zu verhindern, dass sich die Gelenkhebel über ein vorgesehenes Mass hinaus bewegen können.

Die durch das Langloch begrenzte Bewegungsmöglichkeit ist insbesondere dann vorteilhaft, wenn die Gelenkhebelzange gemäss Anspruch 7 zum Schliessen einer klammerartigen Plombe ausgebildet ist. Durch den Anschlag im Langloch wird erreicht, dass sich die Schliessbacken nur bis auf ein bestimmtes Mass einander nähern können.

Anhand der Zeichnung wird ein Ausführungsbeispiel der Erfindung anhand einer Verschlusszange zum Schliessen von Plomben um ein Umreifungsband näher erläutert. Es zeigt:

Fig. 1 einen Zangenkopf in geöffneter Stellung,

Fig. 2 den Zangenkopf in geschlossener Stellung nach der Linie II-II der Fig. 3, und

Fig. 3 den Zangenkopf in einer Schnittansicht nach der Linie III-III der Fig. 2.

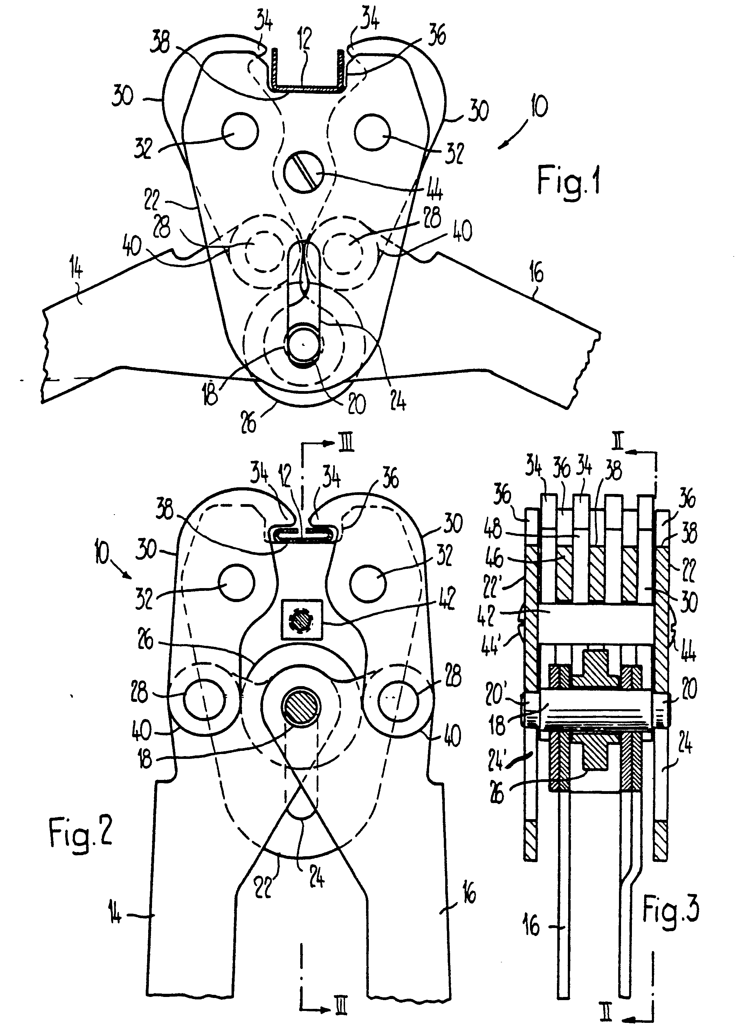

Die in den Fig. dargestellte Verschlusszange 10 dient zum Schliessen einer metallischen Plombe 12 um ein nicht gezeigtes Umreifungsband, welches zum Verpacken von Paketen oder zu bündelnden Gegenständen verwendet wird. Die nur in den Fig. 1 und 2 in der Stirnansicht dargestellte Plombe 12 weist überlicherweise eine Länge der aus der Fig. 3 ersichtlichen Dicke der Verschlusszange auf.

In der Fig. 1 sind die Betätigungsarme 14 und 16 der Verschlusszange stark gekürzt dargestellt. Sie sind durch ein zentrales Gelenk miteinander verbunden, welches insbesondere durch einen Gelenkbolzen 18 dargestellt ist. Der Gelenkbolzen 18 ist beiderends mit je einem Zapfen 20, 20' (Fig. 3) in einem in je einer Platte 22, 22' angeordneten Langloch 24, 24' radial verschiebbar geführt. Die Langlöcher 24, 24' erstrecken sich auf der Symmetrielinie der Zange 10. Auf dem Gelenkbolzen 18 ist zwischen den beiden Platten 22, 22' eine grosse Rolle 26 drehbar gelagert.

An den beiden Betätigungsarmen 14, 16 sind mittels weiterer Gelenkbolzen 28 Gelenkhebel 30 angelenkt, die auf je einem Lagerbolzen 32 schwenkbar gelagert sind. Die beiden Lagerbolzen 32 sind in einem festen Abstand voneinander symmetrisch zur Symmetrielinie in den beiden Platten 22, 22' eingesetzt. Die freien Enden der beiden Gelenkhebel 30 sind als symmetrische Schliessbacken 34 zum Schliessen der klammerartigen Plombe 12 ausgebildet.

Zum Einlegen der Plombe 12 weisen die Platten 22, 22' je eine rechteckige Aussparung 36 auf, deren Boden 38 den Schliessbacken 34 in geschlossener Stellung als Gegenhalter für die

Plombe 12 gegenüberliegt. Obwohl sich die Schenkel der in der Fig. 2 dargestellten geschlossenen Plombe 12 nicht überlappen, ist die dargestellte Zange auch zum Schliessen von Plomben mit sich gegenseitig überlappenden Schenkeln geeignet.

Auf den beiden Gelenkbolzen 28 ist je eine Rolle 40 gelagert. Die beiden Rollen 40 weisen einen kleineren Durchmesser als die auf dem zentralen Gelenkbolzen 18 gelagerte grosse Rolle 26 auf und berühren mit ihren Umfangsflächen die Umfangsfläche der grossen Rolle 26. Dadurch werden die in der Art von Kniehebelgelenken wirksamen Gelenke zwischen den Betätigungsarmen 14, 16 und den Gelenkhebeln 30 entlastet oder anders ausgedrückt, wird die zu übertragende Kraft vergrössert, weil die Rollen 26 und 40 die Übertragung der Kräfte im wesentlichen übernehmen. Beim Betätigen der Betätigungsarme 14, 16 von Hand werden die kleineren Rollen 40 durch die grosse Rolle 26 keilartig auseinandergetrieben. Selbstverständlich ist es eine Voraussetzung, dass die Summe der Radien der grossen Rolle 26 und einer kleinen Rolle 40 exakt dem Hebelarm zwischen dem Gelenkbolzen 18 und einem der Gelenkbolzen 28 entsprechen muss.

Aus der Fig. 3 ist ersichtlich, dass die beiden Platten 22 und 22' in einem bestimmten Abstand voneinander durch eine Vierkantsäule 42 miteinander verbunden sind. Die Säule 42 ist durch Linsenkopfschrauben 44 und 44' an den beiden Platten 22 und 22' befestigt.

Aus der Fig. 3 ist ferner ersichtlich, dass zwischen den beiden Platten 22 und 22' drei Zwischenplatten 46 angeordnet sind, die ebenfalls wie die Platten 22 und 22' Aussparungen 36 mit einem Boden 38 aufweisen, so dass die zu schliessenden Plomben nicht nur von den Aussparungen 36 in den Platten 22 und 22', sondern auch von denjenigen in den drei Zwischenplatten 46 aufgenommen werden. Die Zwischenplatten 46 sind der besseren Übersicht wegen in den Fig. 1 und 2 nicht dargestellt. Diese Zwischenplatten sind stirnseitig auf der Vierkantsäule 42 abgestützt und durch die Lagerbolzen 32 gegen Verschiebung gesichert.

Zwischen jeweils zwei Zwischenplatten 46 sind weitere Gelenkhebel 48 angeordnet, die parallel mit den Gelenkhebeln 30 bewegt werden. Auch diese zusätzlichen Gelenkhebel 48 weisen Schliessbacken 34 auf.

Die zu schliessenden Plomben 12 werden demnach insgesamt von vier Schliessbackenpaaren 34 erfasst, wobei die fünf Böden 38 der Aussparungen 36 als Gegenhalterung wirken. Die Schliessbacken 34 greifen symmetrisch an den Schenkeln der Plombe 12 an, um diese gegen den Steg der Plombe zu biegen. Dabei werden die beiden Enden eines nicht dargestellten Umreifungsbandes miteinander verbunden. Durch die Anordnung von abwechselnd einem Schliessbackenpaar 34 und einer Gegenhalterung 38 lässt sich gewährleisten, dass die klammerartigen Plomben 12 über ihre ganze Länge gleichmässig geschlossen werden.

Obwohl als Ausführungsbeispiel eine Verschlusszange zum Schliessen von Plomben beschrieben wurde, lässt sich das gleiche Prinzip einer Gelenkhebelzange insbesondere auch bei Bolzenschneidern und anderen gleichartigen Werkzeugen anwenden, bei denen eine grosse Kraft auf die Backen zu übertragen ist.

Es ist auch eine Konstruktion denkbar, bei der nur die beiden weiteren Gelenke Rollen tragen, während das zentrale Gelenk mit einem Keil verbunden ist, welcher die Rollen der beiden weiteren Gelenke beim Zusammendrücken der Betätigungsarme auseinandertreibt.

**Patentansprüche**

1. Gelenkhebelzange mit zwei um ein zentrales Gelenk (18) verschwenkbaren Betätigungsarmen (14, 16), an denen mittels je eines weiteren Gelenkes (28) je ein Gelenkhebel (30) angesetzt ist und beide Gelenkhebel (30) in einer festen Beziehung zueinander um mindestens eine Drehachse (32) schwenkbar gelagert sind, dadurch gekennzeichnet, dass das zentrale Gelenk (18) ein erstes Abstützmittel (26) aufweist, auf welchem sich mit den beiden weiteren Gelenken (28) verbundene zweite Abstützmittel (40) über den ganzen Schwenkbereich der Betätigungsarme (14, 16) hinweg abstützen.

2. Gelenkhebelzange nach Anspruch 1, dadurch gekennzeichnet, dass die auf dem ersten Abstützmittel (26) abgestützten zweiten Abstützmittel auf den beiden Achsen der weiteren Gelenke (28) gelagerte Rollen(40) sind, die beim Schliessen der beiden Betätigungsarme (14, 16) durch das sich keilartig dazwischen schiebende erste Abstützmittel (26) auseinandergedrängt werden.

3. Gelenkhebelzange nach Anspruch 2, dadurch gekennzeichnet, dass das erste Abstützmittel eine auf der Achse des zentralen Gelenkes (18) gelagerte Rolle (26) ist, auf welcher die beiden Rollen (40) der weiteren Gelenke (28) abwälzbar sind.

4. Gelenkhebelzange nach Anspruch 3, dadurch gekennzeichnet, dass die Rolle (26) des zentralen Gelenkes (18) einen grösseren Durchmesser aufweist als jede der beiden Rollen (40) der beiden weiteren Gelenke (28).

5. Gelenkhebelzange nach einem der Ansprüche 1 bis 4, dadurch gekennzeichnet, dass die beiden Gelenkhebel (30) in einem festen Abstand (32-32) voneinander schwenkbar gelagert sind.

6. Gelenkhebelzange nach Anspruch 5, dadurch gekennzeichnet, dass die beiden Gelenkhebel (30) zwischen zwei deren Schwenkachsen (32) aufnehmenden, parallel zueinander angeordneten Platten (22, 22') gelagert sind, in welchen Platten (22, 22') ein Gelenkbolzen (18) des zentralen Gelenkes in je einem Langloch (24,

24') geführt ist, welches sich entlang einer symmetrisch zu den beiden Schwenkachsen (32) verlaufenden Mittellinie erstreckt.

7. Gelenkhebelzange nach einem der vorstehenden Ansprüche, dadurch gekennzeichnet, dass die Gelenkhebel gegeneinander bewegbare Backen aufweisen, die als Schliessbacken (34) zum Schliessen einer klammerartigen Plombe (12) ausgebildet sind.

## Claims

1. Multiple pivot pincers with two actuating arms (14, 16) which are pivotal round a central joint (18) and on which a respective articulated lever (30) is arranged by means of a respective further joint (28) and both articulated levers (30) are pivotally mounted in a fixed relationship to one another round at least one axis of rotation (32), characterised in that the central joint (18) has a first supporting member (26) on which second supporting members (40) connected to the two other joints (28) rest over the entire pivoting range of the actuating arms (14, 16).

2. Multiple pivot pincers according to claim 1, characterised in that the second supporting members resting on the first supporting member (26) are rollers (40) mounted on the two pivots of the other joints (28) which are driven apart by the first supporting member (26) pushed between them in the manner of a wedge when the two actuating arms (14, 16) are closed.

3. Multiple pivot pincers according to claim 1, characterised in that the first supporting member is a roller (26) which is mounted on the pivot of the central joint (18) and on which the two rollers (40) of the other joints (28) are capable of rolling.

4. Multiple pivot pincers according to claim 1, characterised in that the roller (26) of the central joint (18) has a greater diameter than either of the two rollers (40) of the other two joints (28).

5. Multiple pivot pincers according to one of claims 1 to 4, characterised in that the two articulated levers (30) are pivotally mounted at a fixed distance (32-32) from one another.

6. Multiple pivot pincers according to claim 5, characterised in that the two articulated levers (30) are mounted between two plates (22, 22') which receive the pivots (32) thereof and are arranged parallel to one another, in which plates (22, 22') a hinge pin (18) of the central joint is guided in a respective slot (24, 24') extending along a centre line running symmetrically to the two pivots (32).

7. Multiple pivot pincers according to one of the preceding claims, characterised in that the articulated levers have jaws capable of moving towards one another, which are constructed as closing jaws (34) for closing a clamp-like lead seal (12).

## Revendications

1. Pince à leviers articulés, comportant deux bras d'actionnement (14, 16) aptes à pivoter autor d'un organe d'articulation central (18), sur chacun desquels un levier d'articulation (30) est rapporté au moyen d'un autre organe d'articulation (28), chacun des deux leviers d'articulation (30) étant monté de manière à pouvoir pivoter autor d'au moins un axe de rotation (32), en étant dans une relation fixe par rapport à l'autre levier d'articulation, caractérisée par le fait que l'organe d'articulation central (18) présente un premier d'appui (26) sur lequel des deuxièmes moyens d'appui (40) liés aux autres organes d'articulation (28) prennent appui dans toute la plage de pivotement des bras d'actionnemant (14, 16).

2. Pince à leviers articulés selon revendication 1, caractérisée par le fait que les deuxièmes moyens d'appui prenant appui sur le premier moyen d'appui (26) sont des galets (40) montés sur les deux axes des autres organes d'articulation (28), ces galets étant forcés, lors de la fermeture des deux bras d'actionnement (14, 16), à s'écarter l'un de l'autre par le premier moyen d'appui (26) s'engageant entre eux à la manière d'un coin.

3. Pince à leviers articulés selon revendication 2, caractérisée par le fait que le premier moyen d'appui est un galet (26) qui est monté sur l'axe de l'organe d'articulation central (18) et sur lequel les deux galets (40) des autres organes d'articulation (28) peuvent rouler.

4. Pince à leviers articulés selon revendication 3, caractérisée par le fait que le galet (26) de l'organe d'articulation central (18) présente un diamètre plus grand que chacun des galets (40) des deux autres organes d'articulation (28).

5. Pince à leviers articulés selon l'une des revendications 1 à 4, caractérisée par le fait que les deux leviers d'articulation (30) sont montés à pivotement à une distance mutuelle fixe (32-32).

6. Pince à leviers articulés selon revendication 5, caractérisée par le fait que les deux leviers d'articulation (30) sont montés entre deux plaques (22, 22'), mutullement parallèles, recevant les axes de pivotement (32), plaques (22, 22') dans chacune desquelles un axe d'articulation (18) de l'organe d'articulation central reçoit un guidage dans un trou allongé (24, 24') qui s'étend le long d'une ligne médiane dont le tracé est symétrique par rapport aux deux axes de pivotemant (32).

Pince à leviers articulés selon l'une des revendications précédentes, caractérisée par le fait que les leviers d'articulation présentent des mâchoires mobiles l'une par rapport à l'áutre, réalisées en tant que mâchoires de fermeture (34) pour fermer un plomb du type agrafe (12).

Fig.1

Fig.2

Fig.3